# EUROPEAN PATENT SPECIFICATION

(11) **EP 2 429 015 B1**
(45) Date of publication and mention of the grant of the patent: **27.11.2013**
(21) Application number: 11179846.8
(22) Date of filing: 02.09.2011
(51) Int. Cl.: H01M 2/10, H01M 10/42, H01M 10/46, H01M 10/48, H02J 9/06

(54) **Power supply unit**
Stromversorgungsgerät
Unité d'alimentation électrique

(30) Priority: 14.09.2010 JP 2010205884
(43) Date of publication of application: 14.03.2012
(73) Proprietor: Sony Corporation, Tokyo 108-0075 (JP)
(72) Inventor: NAKAMURA, Kazuo, Minato-ku, Tokyo 108-0075 (JP); UESAKA, Shinichi, Minato-ku, Tokyo 108-0075 (JP); MASATO, Tsuyoshi, Minato-ku, Tokyo 108-0075 (JP); OZAWA, Atsushi, Minato-ku, Tokyo 108-0075 (JP); HOTTA, Shin, Minato-ku, Tokyo 108-0075 (JP); MARUTANI, Kentaro, Minato-ku, Tokyo 108-0075 (JP)
(74) Representative: Lewis, Darren John

(56) References cited:
- WO-A2-2009/017406
- DE-A1- 4 337 786
- US-A- 5 778 325
- US-A1- 2006 091 849
- US-A1- 2009 252 994
- US-B1- 6 406 812
- US-B1- 6 849 357

## Description

The present disclosure relates to a power supply unit.

For example, a rechargeable battery pack has been made public by JP-A-9-007644. The rechargeable battery pack has a casing 2 and a secondary battery 3 contained in the casing, and the casing is provided with output terminals 7 and 8 and a remaining power communicating terminal 9. A DC-DC converter 5 for stabilizing a terminal voltage of the secondary battery to a predetermined value and outputting the stabilized voltage to an output terminal is contained in the casing. The casing also contains a remaining power detector 6 for detecting the terminal voltage of the secondary battery before the voltage is stabilized by the DC-DC converter and outputting the voltage to the remaining power communicating terminal 9.

In the rechargeable battery pack having such a configuration, the DC-DC converter 5 stabilizes the terminal voltage of the secondary battery 3 to a predetermined value, and the remaining power detector 6 detects the terminal voltage corresponding to the remaining power of the secondary battery 3. Thus, the remaining power of the secondary battery 3 can be easily detected with a high level of regulation and user friendliness achieved as thus described.

Some users want to use a plurality of battery packs (power supply units) by combining the battery packs in such an appropriate manner that they can be efficiently recharged. The users also want to use a plurality of battery packs (power supply units) having different capacities in combination. The rechargeable battery pack disclosed in the above mentioned patent publication was devised on an assumption that it would be used alone, and it is therefore difficult to use a plurality of such rechargeable battery packs in combination.

It is therefore desirable to provide a power supply unit which can be easily combined with other identical units to use a plurality of such power supply units.

Various respective aspects and features of the invention are defined in the appended claims. Combinations of features from the dependent claims may be combined with features of the independent claims as appropriate and not merely as explicitly set out in the claims.

An embodiment of the present disclosure is directed to a power supply unit including (A) a housing having a shape like a polygonal column, (B) a secondary battery cell contained in the housing, (C) charge/discharge control means contained in the housing and connected to the secondary battery cell, (D) at least one power input section disposed on the housing and connected to the charge/discharge control means, and (E) at least one power output section disposed on the housing and connected to the charge/discharge control means.

The housing of the power supply unit according to the present disclosure has a shape like a polygonal column, and a plurality of such power supply units can be combined. Since at least power input section and at least one power output section are disposed on the housing, a power input section and a power output section can be connected between adjoining power supply units, which allows a plurality of such power supply units to be easily combined. For example, a plurality of power supply units of various types having different capacities may be combined or mixed to use them collectively as one power supply unit group. It is therefore possible to provide power supply units having flexibility to be adapted to increasing applications of such units and to satisfy various needs in the fields of application. Further, a plurality of power supply units of various types can be combined or mixed to use them collectively as one power supply unit group even if they are different from each other in the degree of deterioration, cumulative time of operation, and the number of recharging operations performed thereon. Secondary battery cells having different capacities and voltages can be used collectively to form one power supply unit group.

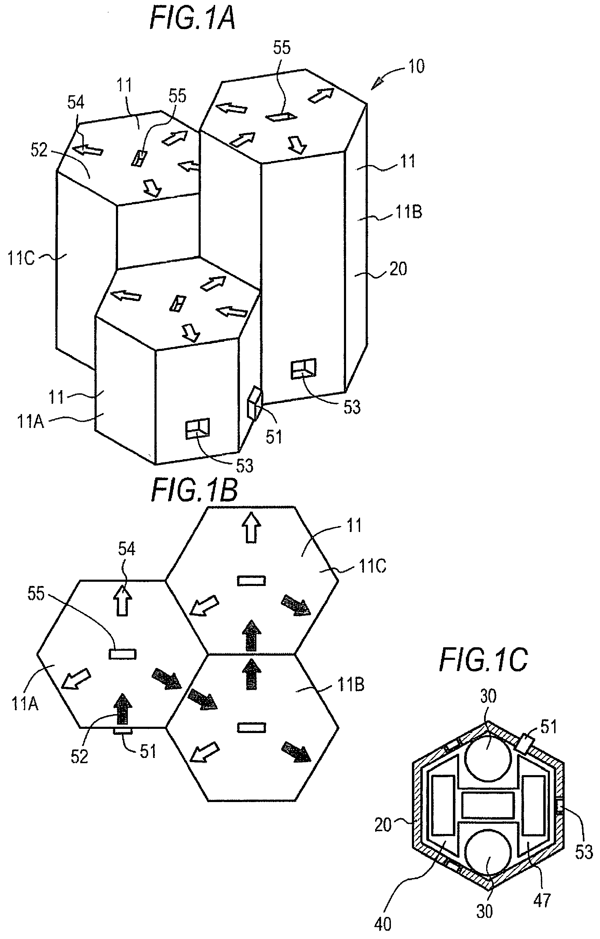

Embodiments of the invention will now be described with reference to the accompanying drawings, throughout which like parts are referred to by like references, and in which: Fig. 1A is a schematic perspective view of a power supply unit group obtained by combining three power supply units according to an embodiment of the present disclosure;
Fig. 1B is a schematic view of the power supply unit group seen from above;
Fig. 1C is a schematic view of the interior of a power supply unit seen from above;
Fig. 2 is a block diagram of charge/discharge control means of the power supply unit of an embodiment;
Fig. 3A is a schematic view of a power supply unit group obtained by six power supply units according to an embodiment of the present disclosure seen from above;
Fig. 3B is a schematic perspective view of a power supply unit having a housing in the form of a regular triangular column;
Fig. 4A is a schematic perspective view of a power supply unit having a housing in the form of a square column; and
Fig. 4B is a conceptual illustration of a power supply unit group formed by combining three power supply units as shown in Fig. 4A seen from beneath.

The present disclosure will now be detailed based on an embodiment thereof with reference to the accompanying drawings. The present disclosure is not limited to the described embodiments, and various numerical values and materials mentioned below in association with the example embodiments are merely examples. The following items will be described in the order listed.
1. General Description of Power Supply Unit According to the Present Disclosure
2. Embodiment (Power Supply Unit According to the Present Disclosure) and Others

### [General Description of Power Supply Unit According to the Present Disclosure]

A charge/discharge control unit of a power supply unit according to one embodiment of the present disclosure may include an integrated circuit for controlling charging and discharging and a DC-DC converter. The DC-DC converter is included in the charge/discharge control unit to allow an voltage output from the power supply unit to be output from the unit after being stabilized at a predetermined value. The integrated circuit for controlling charging and discharging and the DC-DC converter may be an integrated circuit for controlling charging and discharging and a DC-DC converter of types which are known in the related art.

A power supply unit according to one embodiment of the present disclosure including the above-described preferable features may further include: (F) at least one information input section disposed in a housing and connected to the charge/discharge control unit; and (G) at least one information output section disposed in the housing and connected to the charge/discharge control unit. When such a configuration is employed, a plurality of power supply units as a whole can be connected to a controller through a communication unit. Thus, the plurality of power supply units can be controlled by the controller. Information can be transmitted/received or exchanged between the plurality of power supply units. States of operation of the plurality of power supply units, e.g., replacement of any of the units, can be checked. The states of operation of the plurality of power supply units can be displayed. An alternative configuration may be employed, in which a power input section also serves as the information input section and a power output section also serves as the information output section.

In a power supply unit according to one embodiment of the present disclosure having the above-described preferable features and configuration, the power input section may be constituted by a USB terminal section, and the power output section may be constituted by a USB terminal section which can be engaged with the power input section constituted by a USB terminal section of another power supply unit. In a power supply unit according to one embodiment of the present disclosure having the above-described preferable features and having the configuration including at least one information input section and at least one information output section, the power input section and the power output section may be constituted by wireless power transmission circuits. Specifically, the wireless power transmission circuits (wireless power transmission systems) may employ, for example, an electromagnetic induction method or a magnetic field resonance method, but the present disclosure is not limited to such methods.

In a power supply unit having various preferable features and a preferable configuration as described above, the housing preferably has such a shape that a plurality of the housings can be disposed side by side without a space between them. Specifically, when it is assumed that the housing which is in the form of a polyhedral column is cut along an imaginary plane orthogonal to the axis of the same, the shape of the section may be any of triangular shapes including an equilateral triangle, any of quadrangular shapes including a square, a rectangle, and a parallelogram, an equilateral hexagonal shape, or an arbitrary shape enclosed by line segments and/or curves. When the housing has a square or rectangular sectional shape, the housing is in the form of a cube or a rectangular parallelepiped.

The housing of a power supply unit having various preferable features and a preferable configuration as described above is desirably in the form of a regular hexagonal column. In this case, the power input section may be provided on an odd-numbered lateral surface of the housing in the form of a regular hexagonal column, and the power output section may be provided on an even-numbered lateral surface of the housing in the form of a regular hexagonal column. The power input section may be provided on all odd-numbered lateral surfaces of the housing in the form of a regular hexagonal column, and the section may alternatively be provided on some of those surfaces. Similarly, the power output section may be provided on all even-numbered lateral surfaces of the housing in the form of a regular hexagonal column, and the section may alternatively be provided on some of those surfaces.

In a power supply unit having various preferable features and a preferable configuration as described above, an input display unit indicating whether power is input or not connected to the charge/discharge control unit may be disposed in the vicinity of the power input unit, and an output display unit indicating whether power is output or not connected to the charge/discharge control unit may be disposed in the vicinity of the power output unit. In this case, the input display unit and the output display unit may be formed by a display portion including an arrow-shaped member transmitting light and a light-emitting element disposed inside the display portion. Further, the input display unit and the output display unit may be disposed on a top surface of the housing.

A power supply unit having various preferable features and a preferable configuration as described above (such a unit may be hereinafter simply referred to as "a power supply unit according to the present disclosure") may be disposed such that a plurality of the power supply units are combined by connecting a power input section and a power output section of each adjoining pair of the power supply units. Thus, a group of power supply units is formed. The minimum number of power supply units to form a group of power supply units is 2, and there is no upper limit for the number of units to be grouped. A group of power supply units may be formed by combining a plurality of power supply units which are horizontally arranged. Alternatively, a group of power supply units may be formed by combining a plurality of power supply units which are vertically arranged or stacked one over another. Still alternatively, a plurality of groups of horizontally combined power supply units may be combined vertically (or stacked one over another). Power supply units forming a power supply unit group may be either the same or different in terms of capacity and size. The power supply units may be either the same or different in terms of the number, the output voltage, or the capacity of the secondary batteries forming part of the units.

Such a group of power supply units is supplied with power from an external power supply through the power input section of at least one of power supply units, whereby the secondary battery cells of the power supply units are charged. The external power supply and the power input section may be connected using a wiring, and connection may alternatively be established using a wireless power transmission method such as the electromagnetic induction method or the magnetic field resonance method. One or a plurality of power consuming apparatuses is connected to the power output section of at least one of the power supply units. That is, one or a plurality of power consuming apparatuses may be connected to one location of the group of power supply units. Alternatively, one or a plurality of power consuming apparatuses may be connected to a plurality of locations of the group of power supply units. The power consuming apparatuses and the power input section may be connected using a wiring, and connection may alternatively be established using a wireless power transmission method such as the electromagnetic induction method or the magnetic field resonance method. For example, such power consuming apparatuses may include electronic apparatuses such as personal computers, television receivers, displays of various types, mobile phones, PDAs, digital still cameras, video cameras, camcorders, and music players, power tools such as power drills, lighting apparatuses such as room lamps, power supply units or home energy servers (home storage batteries), medical instruments, and toys. However, the present disclosure is not limited to such apparatuses. Not only the commercial power source but also other power supplies of various types may be used as the external power supply, including solar batteries, fuel cells, aerogenerators, micro hydroelectric generators, and geothermal power generators. However, the power supply unit according to the present disclosure is not limited to such external power supplies. The housing may be made of a plastic material such as a thermoplastic resin. Specifically, the housing may be fabricated using, for example, a polyolefine type resin such as a polyethylene resin or a polypropylene resin; a polyamide type resin such as polyamide 6, polyamide 66, or polyamide MXD6; a polyoxymethylene (POM or polyacetal) resin; a polyester type resin such as a polyethylene terephthalate (PET) resin, or a polybutylene terephthalate (PBT) resin; a polyphenylene sulfide resin; a styrene type resin such as a polystyrene resin, an ABS resin, an AES resin, or an AS resin; a methacrylate resin; a polycarbonate resin; a modified polyphenylene ether (PPE) resin; a polysulfone resin; a polyether sulfone resin; a polyarylate resin; a polyether imide resin; a polyamide-imide resin; a polyimide type resin; a polyether ketone resin; a polyether ether ketone resin; a polyester carbonate resin; or a liquid crystal polymer. However, the present disclosure is not limited to such materials.

When power supply units according to the present disclosure are connected to a controller through a communication unit or when the power supply units are connected to each other through a communication unit, the communication unit may be a common telephone network or an optical fiber network including the internet communication network, a communication unit according to ZigBee, a wireless LAN, a communication unit according to RC232, a USB communication unit, an infrared communication unit according to IrDA or the like, a communication unit according to Bluetooth which is one of wireless LAN protocols or HomeRF, or a combination of communication units as thus described. However, the present disclosure is not limited to such communication units. A personal computer may serve as the controller or part of the controller. A mobile terminal including a display may be provided, and the controller and the mobile terminal may be connected through the communication unit. Such a configuration allows the state of operation of the power supply unit or a group of the power supply units to be remotely checked. For example, the mobile terminal may be a mobile phone, a PDA (personal digital assistant), or a notebook type personal computer. However, the present disclosure is not limited to such a mobile terminal.

### [Embodiment]

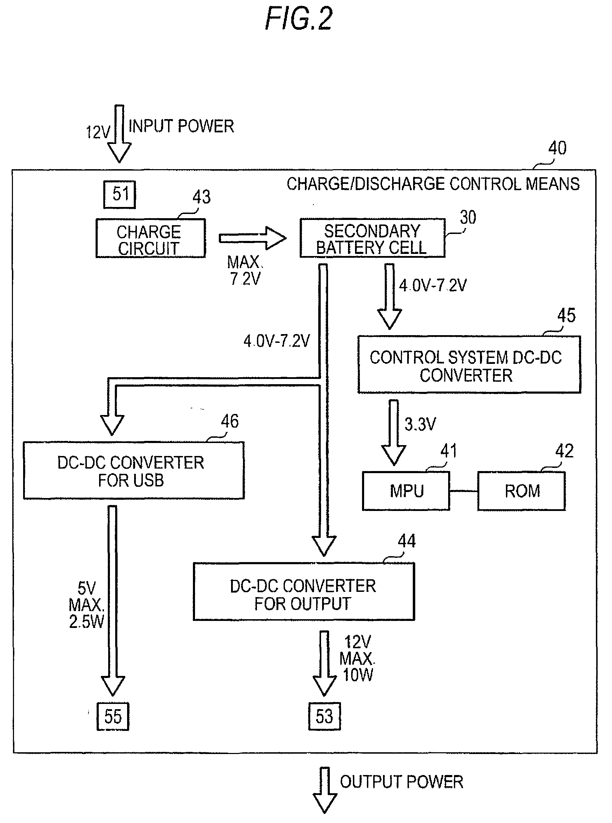

An embodiment of a power supply unit according to the present disclosure will now be described. Fig. 1A is a perspective view of a power supply unit group obtained by combining power supply units according to an embodiment. Fig. 1B is a schematic view of the power supply unit group seen from above. Fig. 1C is a schematic view of the interior of a power supply unit seen from above. Fig. 2 is a block diagram of a charge/discharge control unit.

A power supply unit 11 according to an embodiment includes a housing 20 having a polygonal columnar shape, a secondary battery cell 30 contained in the housing 20, a charge/discharge control unit 40 contained in the housing 20 and connected to the secondary battery cell 30, at least one power input section 51 disposed on the housing 20 and connected to the charge/discharge unit 40, and at least one power output section 53 disposed on the housing 20 and connected to the charge/discharge control unit 40. While a power supply unit group 10 according to the present embodiment is formed by combining three power supply units 11A, 11B, and 11C, the number of power supply units is not limited to such a number.

In a power supply unit 11 according to the present embodiment, the housing 20 has such a shape that a plurality of the housings 20 can be disposed side by side without a space between them. Specifically, when it is assumed that the housing 20 is cut along an imaginary plane orthogonal to the axis of the same, the section has a regular hexagonal shape. The power input section 51 is provided on an odd-numbered lateral surface of the housing 20 having a regular hexagonal shape. The power output section 53 is provided on an even-numbered lateral surface of the housing 20 having a regular hexagonal shape. Although one power input section 51 and three power output sections 53 are provided in the illustrated embodiment, the power supply unit according to other embodiments is not limited to such a configuration. The power input section 51 and the power output sections 53 are connected to the charge/discharge control unit 40 through wirings which are not shown. The three power supply units 11 in Fig. 1A have different heights. That is, the three power supply units 11 have different capacities. Specifically, the housings 20 are different from each other in terms of the number of secondary battery cells 30 contained therein. The housings 20 are provided by molding a plastic material such as an ABS resin.

A power supply unit 11 according to the embodiment further includes at least one information input section disposed in the housing 20 and connected to the charge/discharge control unit 40 and at least one information output section disposed in the housing 20 and connected to the charge/discharge control unit 40. Specifically, the information input section and the information output section are USB terminal sections 55. More specifically, the information input section is a USB terminal, and the information output section is a USB socket. The USB terminal sections 55 are connected to the charge/discharge control unit 40 through wirings which are not shown. Information can be exchanged between the plurality of power supply units 11 by connecting the information input sections and the information output sections of the plurality of power supply units 11 to each other through USB cables. The information output section of any of the power supply units 11 may be connected to, for example, a controller (not shown) configured by a personal computer through a USB cable. Then, the plurality of power supply units 11 can be controlled by the controller. Information can be transmitted/received or exchanged between the plurality of power supply units 11. States of operation of the plurality of power supply units 11, e.g., replacement of any of the units, can be checked. The states of operation of the plurality of power supply units 11 can be displayed. The controller and the power supply units 11 may alternatively connected according to, for example, the ZigBee standard.

As occasion demands, the power input section 51 may be constituted by a USB terminal section, and the power output section 53 may be constituted by a USB terminal section which can be engaged with the power input section 51 constituted by the USB terminal section. Specifically, a micro USB terminal and a micro USB socket may be used as the power input section 51 and the power output section 53, respectively. Alternatively a micro USB terminal and a micro USB socket may be used as the power output section 53 and the power input section 51, respectively.

The charge/discharge control unit 40 of a power supply unit 11 according to the embodiment includes an integrated circuit (charge circuit) 43 of a well known type and a DC-DC converter (DC-DC converter for output) 44 of a known type. The charge/discharge control unit 40 further includes an MPU 41, a storage unit 42 constituted by an EEROM, a control system DC-DC converter 45, and a DC-DC converter 46 for USB. For example, input power at a voltage of 12 volts is input to the integrated circuit (charge circuit) 43 from an external power supply such as a commercial power supply or a solar battery. Then, the integrated circuit (charge circuit) 43 operates in the well-known manner to charge the secondary battery cell 30 which is a lithium ion secondary battery. Power is supplied from the secondary battery cell 30 to the MPU 41 and the storage unit 42 through the control system DC-DC converter 45. Power is also supplied from the secondary battery cell 30 outside through the DC-DC converter 44 for output and the power output section 53. In addition, power is supplied to the USB terminal section 55 through the DC-DC converter 46 for USB. The features such as the MPU 41 are mounted on a printed circuit board 47.

The power input section 51 and the power output section 53 have structures which can be engaged with each other. Specifically, the power input section 51 may have a structure in the form of a projection, and the power output section 53 may have a structure in the form of a recess. A power input section 51 and a power output section 53 of each pair of adjoining power supply units 11 can be engaged with each other to provide a power supply unit group 10 which is a combination of a plurality of power supply units 11. The charge/discharge control unit 40 has such a structure that the state of engagement between a power input section 51 and a power output section 53 can be detected by a detection unit (e.g., a switch) which is not shown.

In the vicinity of the power input section 51 of a power supply unit 11, there is provided an input display unit 52 which is connected to the charge/discharge control unit 40 and which displays whether power is input or not. In the vicinity of the power output section 53, there is provided an output display unit 54 which is connected to the charge/discharge control unit 40 and which displays whether power is output or not. The input display unit 52 and the output display unit 54 are formed by a display portion including an arrow-shaped member transmitting light and a light-emitting element (not shown) disposed inside the display portion. Specifically, the light-emitting element may be an LED. The input display unit 52 and the output display unit 54 are disposed on the top surface of the housing 20. The light-emitting elements are connected to the charge/discharge control unit 40 through wirings, and the light-emitting elements are turned on and off under control exercised by the charge/discharge control unit 40. More specifically, the charge/discharge control unit 40 checks the state of engagement of the power input section 51 and the power output section 53 and detects a flow of a current between the power input section 51 and the power output section 53. The light-emitting elements are turned on and off under control exercised based on the result of such operations. In Fig. 1B, the input display unit 52 represented by black arrows indicate that power is supplied (input) from an external power supply to the respective power input sections 51 located in the vicinity thereof. The output power display unit 54 represented by black arrows indicate that power is supplied (output) outside or supplied to the adjacent power supply units 11 from the respective power output sections located in the vicinity thereof. The same applies in the following description. A charging state display unit (not shown) constituted by an LED for displaying the state of charging and a discharging state display unit or a remaining power display unit (not shown) constituted by an LED for displaying the state of discharging may be provided on the housing 20 of the power supply unit 11, and those units may connected to the charge/discharge control unit 40 to control the operations of them by the charge/discharge control unit 40. The input display unit 52 and the output display unit 54 may be made to also serve as the charging state display unit and the discharging state display unit or the remaining power display unit, respectively. In this case, for example, the functions of the charging state display unit and the discharging state display unit or the remaining power display unit can be achieved in the form of a blinking state of the light-emitting elements.

Power is supplied to the power supply unit group 10 of the present embodiment from an external power supply through a power input section 51 provided in one location of the group to charge the secondary battery cells 30 of the three power supply units 11. Power is supplied (output) to power consuming apparatuses through a power output section 53 provided in one location or two locations of the group to drive the power consuming apparatuses.

In the present embodiment, the housings 20 of the power supply units 11 are in the form of polygonal columns (specifically, regular hexagonal columns), and the plurality of power supply units 11 can therefore be combined without a space between them. A power input section 51 and a power output section 53 can be connected between each pair of adjoining power supply units 11 to allow the plurality of power supply units 11 to be easily combined. For example, a plurality of power supply units 11 of various types having different capacities may be combined or mixed to use them collectively as one power supply unit group 10.

While an example embodiment of the present disclosure has been primarily described, the present disclosure is not limited to the embodiment. The embodiment has merely showed examples of the configurations and structures of a power supply unit, a power supply unit group, a secondary battery cell, a charge/discharge control unit, a power input section, and a power output section in accordance with embodiments of the invention according to the present disclosure, and modifications may be made as occasion demands. At least one power input section and at least one power output section disposed in a housing 20 and connected to the charge/discharge control unit 40 as described above may employ the magnetic field resonance method. Specifically, a power transmitter including a high frequency power supply circuit and a matching circuit and a power receiver including a matching circuit, a high-speed rectifier circuit, and a power supply conversion circuit may be incorporated in the charge/discharge control unit 40. The power output section may be constituted by a power transmission device connected to the matching circuit forming part of the power transmitter. The power input section may be constituted by a power receiving device connected to the matching circuit forming part of the power receiver.

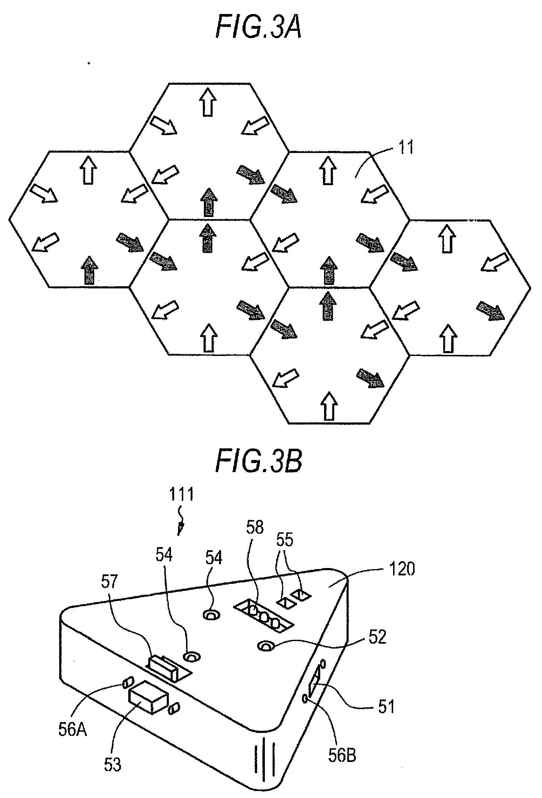

For example, six power supply units according to the present disclosure may be combined to form a power supply unit group as shown in Fig. 3A. Fig. 3A is a schematic view of such a power supply unit group seen from above. In the illustrated example, each power supply unit includes three power input sections 51 and three power output sections 53.

As shown in Fig. 3B, a power supply unit 111 having a housing 120 in the form of a regular triangular column may be provided. Reference numeral 56A represents pins, and reference numeral 56B represents holes which are engaged with the pins. When a power supply unit 111 is combined with another by engaging pins 56A and holes 56B with each other as thus described, it is possible to prevent an excessive force from being applied to a power input section 51 and a power output section 53. Reference numeral 57 represents a knob operated to allow the power output section 53 to be projected and retracted. Further, reference numeral 58 represents a display unit which is a combination of a charging state display unit and a discharging state display unit or a remaining power display unit, and the display unit is formed by arranging a plurality of LEDs. The display unit 58 is connected to a charge/discharge control unit 40.

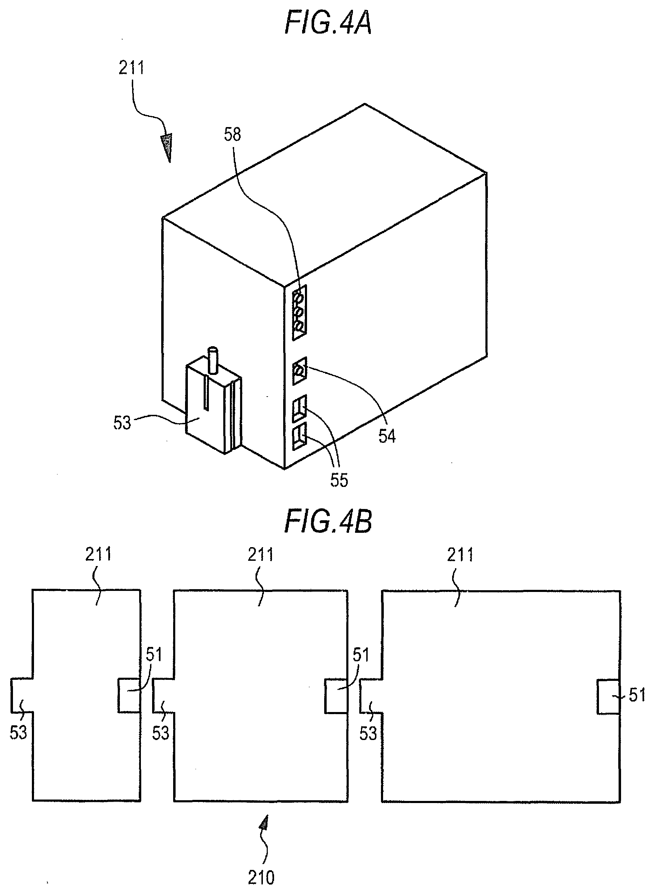

A power supply unit 211 having a housing in the form of a square column (or a rectangular parallelepiped) may be provided as represented by a schematic perspective view in Fig. 4A. Fig. 4B is a conceptual illustration of a power supply unit group 210 formed by combining three power supply units 211 as thus described seen from beneath.

It should be understood by those skilled in the art that various modifications, combinations, sub-combinations and alterations may occur depending on design requirements and other factors insofar as they are within the scope of the appended claims.

## Claims

1. A power supply unit comprising:
(A) a housing having a shape like a polygonal column;
(B) a secondary battery cell contained in the housing;
(C) charge/discharge control means contained in the housing and connected to the secondary battery cell;
(D) at least one power input section disposed on the housing and connected to the charge/discharge control means; and
(E) at least one power output section disposed on the housing and connected to the charge/discharge control means, wherein the power input section and the power output section have structures which are engageable with each other such that the power input section of the power supply unit can be engaged with a corresponding power output section of another power supply unit and the power output section of the power supply unit can be engaged with a corresponding power input section of another power supply unit.

2. A power supply unit according to Claim 1, wherein the charge/discharge control means includes an integrated circuit for controlling charging and discharging and a DC-DC converter.

3. A power supply unit according to Claim 1, further comprising:
(F) at least one information input section disposed on the housing and connected to the charge/discharge control means; and
(G) at least one information output section disposed on the housing and connected to the charge/discharge control means.

4. A power supply unit according to Claim 3, wherein
the power input section also serves as the information input section; and
the power output section also serves as the information output section.

5. A power supply unit according to Claim 1, wherein
the power input section includes a USB terminal section; and
the power output section includes a USB terminal section which is engageable with a power input section including a USB terminal section.

6. A power supply unit according to Claim 1, wherein the power input section and the power output section include a wireless power transmission circuit.

7. A power supply unit according to Claim 1, wherein the housing has such a shape that a plurality of the housings can be arranged side by side without a space between them.

8. A power supply unit according to Claim 1, wherein the housing has a shape like a regular hexagonal column.

9. A power supply unit according to Claim 8, wherein
the power input section is provided on an odd-numbered lateral surface of the housing having a shape like a regular hexagonal column; and
the power output section is provided on an even-numbered lateral surface of the housing having a shape like a regular hexagonal column.

10. A power supply unit according to Claim 1, comprising:
input display means indicating whether power is input or not provided in the vicinity of the power input section and connected to the charge/discharge control means; and
output display means indicating whether power is output or not provided in the vicinity of the power output section and connected to the charge/discharge control means.

11. A power supply unit according to Claim 10, wherein the input display means and output display means include a display portion including an arrow-like member transmitting light and a light-emitting element disposed inside the display portion.

12. A power supply unit according to Claim 11, wherein the input display means and output display means are disposed on a top surface of the housing.

## Patentansprüche

1. Stromversorgungseinheit, die Folgendes umfasst:
(A) ein Gehäuse mit einer Gestalt wie eine vieleckige Säule;
(B) eine in dem Gehäuse enthaltene Akkumulatorzelle;
(C) in dem Gehäuse enthaltene und mit der Akkumulatorzelle verbundene Lade-/Entladesteuermittel,
(D) mindestens einen an dem Gehäuse angeordneten und mit dem Lade-/Entladesteuermittel verbundenen Stromeingangsabschnitt; und
(E) mindestens einen an dem Gehäuse angeordneten und mit dem Lade-/Entladesteuermittel verbundenen Stromausgangsabschnitt, wobei der Stromeingangsabschnitt und der Stromausgangsabschnitt Strukturen aufweisen, die derart miteinander in Eingriff gebracht werden können, dass der Stromeingangsabschnitt der Stromversorgungseinheit mit einem entsprechenden Stromausgangsabschnitt einer anderen Stromversorgungseinheit in Eingriff gebracht werden kann und der Stromausgangsabschnitt der Stromversorgungseinheit mit einem entsprechenden Stromeingangsabschnitt einer anderen Stromversorgungseinheit in Eingriff gebracht werden kann.

2. Stromversorgungseinheit nach Anspruch 1, wobei das Lade-/Entladesteuermittel eine integrierte Schaltung zum Steuern des Ladens und Entladens und einen DC-DC-Wandler enthält.

3. Stromversorgungseinheit nach Anspruch 1, die weiterhin Folgendes umfasst:
(F) mindestens einen an dem Gehäuse angeordneten und mit dem Lade-/Entladesteuermittel verbundenen Informationseingangsabschnitt und
(G) mindestens einen an dem Gehäuse angeordneten und mit dem Lade-/Entladesteuermittel verbundenen Informationsausgangsabschnitt.

4. Stromversorgungseinheit nach Anspruch 3, wobei der Stromeingangsabschnitt auch als der Informationseingangsabschnitt dient und
der Stromausgangsabschnitt auch als der Informationsausgangsabschnitt dient.

5. Stromversorgungseinheit nach Anspruch 1, wobei der Stromeingangsabschnitt einen USB-Anschlussabschnitt enthält und
der Stromausgangsabschnitt einen USB-Anschlussabschnitt enthält, der mit einem einen USB-Anschlussabschnitt enthaltenden Stromeingangsabschnitt in Eingriff gebracht werden kann.

6. Stromversorgungseinheit nach Anspruch 1, wobei der Stromeingangsabschnitt und der Stromausgangsabschnitt eine drahtlose Stromübertragungsschaltung enthalten.

7. Stromversorgungseinheit nach Anspruch 1, wobei das Gehäuse eine derartige Gestalt aufweist, dass mehrere der Gehäuse Seite an Seite ohne Platz zwischen ihnen angeordnet werden können.

8. Stromversorgungseinheit nach Anspruch 1, wobei das Gehäuse eine Gestalt wie eine regelmäßige sechseckige Säule aufweist.

9. Stromversorgungseinheit nach Anspruch 8, wobei der Stromeingangsabschnitt an einer ungeradzahligen seitlichen Oberfläche des Gehäuses mit einer Gestalt wie eine regelmäßige sechseckige Säule vorgesehen ist und
der Stromausgangsabschnitt an einer geradzahligen seitlichen Oberfläche des Gehäuses mit einer Gestalt wie eine regelmäßige sechseckige Säule vorgesehen ist.

10. Stromversorgungseinheit nach Anspruch 1, die Folgendes umfasst:
Eingangsanzeigemittel, die anzeigen, ob Strom eingegeben wird oder nicht, in der Nähe des Stromeingangsabschnitts vorgesehen und mit dem Lade-/Entladesteuermittel verbunden; und
Ausgangsanzeigemittel, die anzeigen, ob Strom ausgegeben wird oder nicht, in der Nähe des Stromausgangsabschnitts vorgesehen und mit dem Lade-/Entladesteuermittel verbunden.

11. Stromversorgungseinheit nach Anspruch 10, wobei das Eingangsanzeigemittel und das Ausgangsanzeigemittel einen Anzeigeabschnitt mit einem lichtdurchlassenden pfeilartigen Glied und einem in dem Anzeigeabschnitt angeordneten lichtemittierenden Element enthalten.

12. Stromversorgungseinheit nach Anspruch 11, wobei das Eingangsanzeigemittel und das Ausgangsanzeigemittel auf einer oberen Oberfläche des Gehäuses angeordnet sind.

## Revendications

1. Bloc d'alimentation, comprenant :
(A) un boîtier présentant la forme d'une colonne polygonale ;
(B) un élément d'accumulateur contenu dans le boîtier ;
(C) un moyen de commande de charge/décharge contenu dans le boîtier et relié à l'élément d'accumulateur ;
(D) au moins une section d'entrée d'énergie située sur le boîtier et reliée au moyen de commande de charge/décharge ; et
(E) au moins une section de sortie d'énergie située sur le boîtier et reliée au moyen de commande de charge/décharge, la section d'entrée d'énergie et la section de sortie d'énergie possédant des structures susceptibles de s'emboîter l'une avec l'autre de façon à permettre à la section d'entrée d'énergie du bloc d'alimentation de s'emboîter avec une section de sortie d'énergie correspondante d'un autre bloc d'alimentation et à permettre à la section de sortie d'énergie du bloc d'alimentation de s'emboîter avec une section d'entrée d'énergie correspondante d'un autre bloc d'alimentation.

2. Bloc d'alimentation selon la revendication 1, dans lequel le moyen de commande de charge/décharge comporte un circuit intégré servant à commander la charge et la décharge et un convertisseur continu-continu.

3. Bloc d'alimentation selon la revendication 1, comprenant en outre :
(F) au moins une section d'entrée d'informations située sur le boîtier et reliée au moyen de commande de charge/décharge ; et
(G) au moins une section de sortie d'informations située sur le boîtier et reliée au moyen de commande de charge/décharge.

4. Bloc d'alimentation selon la revendication 3, dans lequel
la section d'entrée d'énergie sert également de section d'entrée d'informations ; et
la section de sortie d'énergie sert également de section de sortie d'informations.

5. Bloc d'alimentation selon la revendication 1, dans lequel
la section d'entrée d'énergie comporte une section borne USB ; et
la section de sortie d'énergie comporte une section borne USB susceptible de s'emboîter avec une section d'entrée d'énergie comportant une section borne USB.

6. Bloc d'alimentation selon la revendication 1, dans lequel la section d'entrée d'énergie et la section de sortie d'énergie comportent un circuit de transmission d'énergie sans fil.

7. Bloc d'alimentation selon la revendication 1, dans lequel le boîtier présente une forme permettant d'agencer côte à côte une pluralité des boîtiers sans laisser d'espace entre eux.

8. Bloc d'alimentation selon la revendication 1, dans lequel le boîtier présente la forme d'une colonne hexagonale régulière.

9. Bloc d'alimentation selon la revendication 8, dans lequel
la section d'entrée d'énergie est placée sur une face latérale impaire du boîtier présentant la forme d'une colonne hexagonale régulière ; et
la section de sortie d'énergie est placée sur une face latérale paire du boîtier présentant la forme d'une colonne hexagonale régulière.

10. Bloc d'alimentation selon la revendication 1, comprenant :
un moyen d'affichage d'entrée indiquant si de l'énergie est ou non appliquée en entrée, placé au voisinage de la section d'entrée d'énergie et relié au moyen de commande de charge/décharge ; et
un moyen d'affichage de sortie indiquant si de l'énergie est ou non fournie en sortie, placé au voisinage de la section de sortie d'énergie et relié au moyen de commande de charge/décharge.

11. Bloc d'alimentation selon la revendication 10, dans lequel le moyen d'affichage d'entrée et le moyen d'affichage de sortie comportent une partie d'affichage comportant un élément du type flèche transmettant de la lumière et un élément émetteur de lumière placé à l'intérieur de la partie d'affichage.

12. Bloc d'alimentation selon la revendication 11, dans lequel le moyen d'affichage d'entrée et le moyen d'affichage de sortie sont placés sur une face de dessus du boîtier.
